# EUROPEAN PATENT APPLICATION

(11) **EP 3 847 934 A1**
(43) Date of publication of application: **14.07.2021**
(21) Application number: 19946244.1
(22) Date of filing: 09.12.2019
(51) Int. Cl.: A47J 43/07

(54) **FOOD PROCESSING DEVICE**

(30) Priority: 12.11.2019 CN 201911102842
(71) Applicant: Kingclean Electric Green Technology (Suzhou) Co. Ltd., Suzhou, Jiangsu 215000 (CN)
(72) Inventor: NI, Zugen, Suzhou Jiangsu 215009 (CN)
(74) Representative: Mewburn Ellis LLP
(86) International application number: PCT/CN2019/123865
(87) International publication number: WO 2021/093063

(57) **Abstract**

The present disclosure relates to the technical field of domestic appliances, and particularly to a food processing device. The food processing device provided by the present disclosure includes a housing and a cup body provided on the housing, a cup cover is provided at an opening of the cup body, the food processing device further includes a driving assembly and a locking assembly, the locking assembly is provided on the housing, the driving assembly can drive the locking assembly to move relative to the housing, to make a free end of the locking assembly switched between a locking position extending out of the housing and an unlocking position extending into the housing. The food processing device provided by the present disclosure has a simple structure in which minimal parts are utilized to achieve higher locking efficiency and unlocking efficiency of the cup body and the cup cover. When the locking assembly is in the unlocking position, even if the cup body is not placed on the housing, the free end of the locking assembly extends into the housing, which prevents the locking assembly from breaking, and further prevents dust or oil stains from accumulating on the locking assembly, thereby improving the locking accuracy of the locking assembly, and further ensuring a simpler and more beautiful appearance of the chef machine.

## Description

### TECHNICAL FIELD

The present disclosure relates to the technical field of domestic appliances, and particularly to a food processing device.

### BACKGROUND

A chef machine is a household food processing device with multiple functions. The chef machine currently commercially available generally has functions of kneading dough, stirring, whipping egg white, mincing meat and leavening dough, etc. For having the plurality of functions, the chef machine can assist a user in making various food, and thus is popular with people.

The chef machine generally includes a housing and a cup body provided on the housing. The cup body is provided with a cup cover at its opening. The opening of the cup body and the cup cover are respectively provided with mutually matching threads. Before the chef machine is operated, an operator can screw the cup cover on the cup body to prevent the food in the cup body from splashing out of the cup body via the opening, so that physical threats to the operator can be avoided.

However, with regard to the chef machine, the locking of the cup cover and the cup body is implemented by the operator manually, which results in an inefficiency and a low automation degree of the locking and unlocking of the chef machine. In addition, parts of the chef machine are assembled compactly and a gap between the cup body and the housing is smaller, which is inconvenient for the operator to manually screw the cup cover on the cup body, thus the efficiency of the locking and unlocking of the chef machine is low.

In order to address the above-mentioned problems, some conventional chef machines include a housing, a cup body, a cup cover, a locking assembly, and a driving assembly. The driving assembly can drive the locking assembly to lock and unlock the cup body and the cup cover with each other. However, a locking portion of the locking assembly is always located on the outside of the housing, when the cup body is not placed on the housing, since there is no cup body to shield the locking portion, the operator, when transporting or cleaning the chef machine, may apply a force to the locking portion of the locking assembly, causing the locking portion to be prone to break off, so that the chef machine cannot be used normally afterwards. In addition, the locking assembly is in contact with the external environment for a long time causing dust or oil stains to be prone to accumulate on the locking assembly, which affects the precision of the use of the locking assembly. Further, the locking assembly is provided outside the housing, which makes the appearance structure of the chef machine unappealing.

In view of this, it is required to provide a chef machine which can solve the problem of inefficient locking and unlocking of the conventional chef machine, the problem that the locking assembly is prone to break off, and the problem of low precision of the use of the locking assembly and unappealing appearance of the locking assembly.

### SUMMARY

An objective of the present disclosure is to provide a food processing device with a simple structure. With regard to the food processing device, minimal parts are utilized to achieve higher efficiency of locking and unlocking of the cup body and the cup cover with each other, can also ensure that a locking assembly is not prone to break off, can also improve a locking accuracy of the locking assembly, and can also provide a simple and appealing appearance for the food processing device.

In view of this, the present disclosure adopts the following technical solutions.

A food processing device, including a housing and a cup body provided on the housing, a cup cover being provided at an opening of the cup body, the food processing device further includes:
a locking assembly provided on the housing; and
a driving assembly configured to drive the locking assembly to move relative to the housing, to make a free end of the locking assembly switched between a locking position extending out of the housing and an unlocking position extending into the housing.

Preferably, the locking assembly is provided inside the housing, and the locking assembly includes:
a connecting portion connected to the driving assembly;
a body provided in an arc shape, one end of the body being connected to the connecting portion, a middle portion of the body being rotatably connected to the housing, the driving assembly and the body are distributed on a periphery of the cup body;and
a clamping portion connected to the other end of the body, the clamping portion and the body together forming a pressing structure, and the pressing structure being capable of pressing the cup cover on the cup body.

Preferably, the locking assembly further includes a rotating shaft by means of which the body is rotatably connected to the housing, and the body is spaced from the housing.

Preferably, one end of the rotating shaft extends out of one side of the body, the other end of the rotating shaft extends out of the other side of the body, and both ends of the rotating shaft are respectively rotatably connected to the housing.

Preferably, the clamping portion extends toward the cup body, a shape and a size of the pressing structure match a shape and a size of an upper end of the cup cover.

Preferably, the driving assembly is a linear driving mechanism, the locking assembly includes a left locking lever and a right locking lever rotatably connected to the housing respectively, one of the body and an output end of the linear driving mechanism is connected to the left locking lever in a rotating way, and the other is connected to the right locking lever in a rotating way.

Preferably, the left locking lever and the right locking lever are symmetrically distributed on both sides of a center line of the cup body.

Preferably, the driving assembly is a linear driving mechanism, the locking assembly is rotatably connected to the housing, one of the body and an output end of the linear driving mechanism is connected to the locking assembly in a rotating way, and the other is connected to the housing in a rotating way.

Preferably, a distance from a pivot connection point of the locking assembly and the linear driving mechanism to a rotating shaft point at which the locking assembly is rotated relative to the housing is a first distance, a distance from an abutment point of the locking assembly and the cup cover to the rotating shaft point is a second distance, the first distance is not less than the second distance.

Preferably, the housing is configured with a receiving cavity for receiving the cup body, an opening is provided on one side of the receiving cavity, a handle on the cup body extends out of the receiving cavity from the opening, and a width of the opening is smaller than a diameter of the cup body;
preferably, a shape and a size of an inner wall of the receiving cavity match a shape and a size of an outer wall of the cup body;
preferably, the food processing device further includes a position detection assembly configured to control the food processing device to work when the locking assembly is in the locking position.

Preferably, the housing is provided with a display screen, the display screen is located on a first plane, and the first plane is located above a horizontal plane and is set at a preset angle to the horizontal plane.

Preferably, the preset angle is ranged from 8° to 60°.

Advantages of the present disclosure are provided as follows.

The food processing device provided by the present disclosure includes a housing and a cup body provided on the housing, and a cup cover is provided at an opening of the cup body. After the cup cover is put on the opening of the cup body, the cup cover and the cup body need to be locked together. The food processing device further includes a driving assembly and a locking assembly. The locking assembly is provided on the housing. The driving assembly can drive the locking assembly to move relative to the housing which makes the free end of the locking assembly switched between the locking position extending out of the housing and unlocking position extending into the housing. The food processing device has a simple structure, and utilizes minimal parts to achieve a higher efficiency of locking and unlocking of the cup body and the cup cover with each other. When the locking assembly is in the unlocking position, even if the cup body is not placed on the housing, since the free end of the locking assembly extends into the housing, the operator, when transporting or cleaning the chef machine, will not apply a force to the locking assembly, thereby preventing the locking assembly from breaking and ensuring the chef machine can be used normally afterwards. In addition, dust or oil stains can be prevented from accumulating on the locking assembly, and the locking accuracy of the locking assembly can be improved. Further, simpler and more appealing appearance of the chef machine can be guaranteed.

### BRIEF DESCRIPTION OF THE DRAWINGS

In order to describe the technical solutions in the embodiments of the present disclosure clearer, accompanying drawings used in the description of the embodiments of the present disclosure are briefly introduced below. Obviously, the drawings in the following description are merely some embodiments of the present disclosure, and those skilled in the art can obtain other drawings according to the embodiments and these accompanying drawings of the present disclosure without any creative work.
FIG. 1 is a schematic structure diagram of a chef machine provided by the present disclosure.
FIG. 2 is a schematic structure diagram I of a chef machine provided by the present disclosure, with part of a housing removed.
FIG. 3 is a schematic structure diagram II of a chef machine provided by the present disclosure, with part of a housing removed.
FIG 4. is a schematic structure diagram in which a locking assembly is in an unlocking position provided by the present disclosure.
FIG. 5 a schematic structure diagram in which a locking assembly is in a locking position provided by the present disclosure.
FIG. 6 is a schematic structure diagram of a housing provided by the present disclosure.

Reference sings are as follows:
100, chef machine;
1, housing; 2, cup body; 3, cup cover; 4, locking assembly; 5, driving assembly;
6, display screen; 11, receiving cavity; 12, bottom groove; 21, handle; 41, left locking lever; 42, right locking lever;
111, inner wall; 411, first rotating shaft; 412, first body; 413, first connecting portion; 414, first clamping portion; 421, second rotating shaft; 422, second body; 423, second connecting portion; 424, second clamping portion.

### DETAILED DESCRIPTION

The present invention will be described in detail below with reference to the accompanying drawings and embodiments. It should be appreciated that the embodiments described below are merely used for explaining the present disclosure, rather than limiting the present disclosure. In addition, for convenient description, the drawings only show a part of the structure related to the present disclosure, rather than the whole structure.

In the description of the present disclosure, unless otherwise clearly specified and defined, the terms "link", "connect", and "fix" should be interpreted broadly, such as a fixed connection, a detachable connection, or integrating; alternatively, the connection may be a mechanical connection or an electrical connection; alternatively, the connection may be a direct connection, or an indirect connection through an intermediate medium, or an internal communication between two elements or an interaction relationship between two elements. Those of ordinary skill in the art can understand the specific meaning of the above-mentioned terms in the present disclosure according to specific conditions.

In the present disclosure, unless otherwise clearly specified and defined, that a first feature is "above" or "below" a second feature may include that the first feature is in direct contact with the second feature, or that the first feature is in contact with the second feature through other features between them rather than direct contact. Moreover, that the first feature is "above", "over" and "on" the second feature includes that the first feature is directly above and obliquely above the second feature, or simply means that a level height of the first feature is higher than that of the second feature. That the first feature is "below", "under" the second feature includes that the first feature is directly below and obliquely below the second feature, or simply means that a level height of the first feature is smaller than that of the second feature.

In the description of the embodiment, terms "upper", "lower", "right", and other orientations or position relationships are based on the orientations or position relationships shown in the drawings, and are only used for facilitating the description and simplifying the operation, rather than indicating or implying that the referred device or element definitely has a specific orientation, is constructed and operated in a specific orientation, and therefore these terms cannot be understood as a limitation to the present disclosure. In addition, terms "first" and "second" are only used for distinguishing in description and have no special meaning.

### Embodiment I

Each of many food processing devices includes a cup body and a cup cover, and the cup body and the cup cover need to be locked together before being used, so that the food in the cup body can be prevented from splashing out of the cup body via the opening, which avoids physical threats to the operator. Such household appliances include a chef machine, a high-speed blender, a juicer, a blender, a juice machine, a soymilk machine, etc. A chef machine is taken as an example for specific description below.

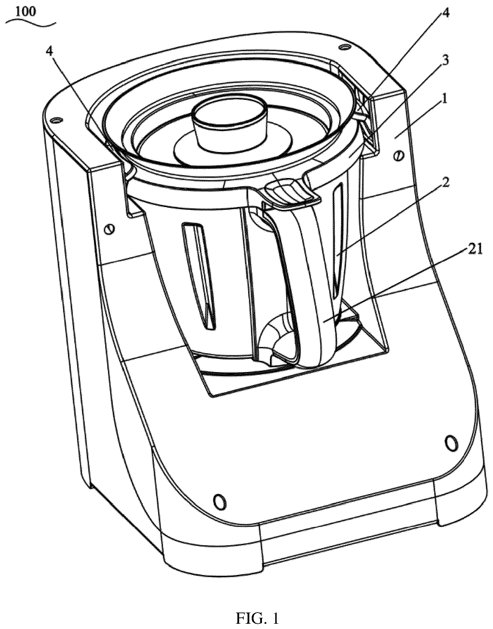

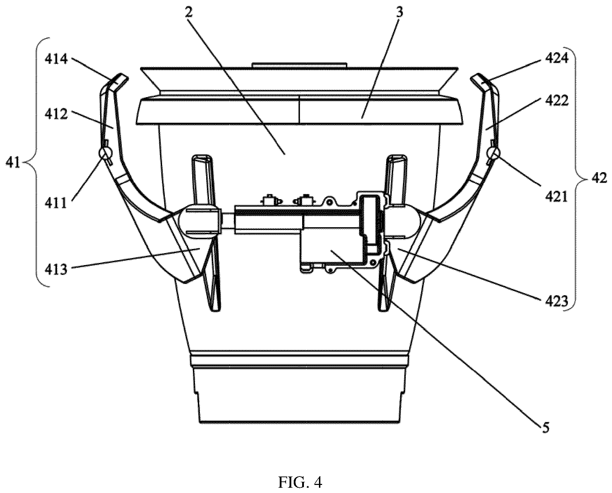

As shown in FIG. 1, a chef machine 100 provided by the embodiment includes a housing 1 and a cup body 2 provided on the housing 1. A cup cover 3 is provided at an opening of the cup body 2. The cup cover 3 and the cup body 2 need to be locked together after the cup cover 3 is put on the opening of the cup body 2, then a stirring assembly in the cup body 2 processes the food in the cup body 2, thereby preventing the food from splashing out of the cup body 2. As shown in FIGS. 1 to 3, the chef machine 100 further includes a locking assembly 4 and a driving assembly 5. The locking assembly 4 is provided on the housing 1. The driving assembly 5 can drive the locking assembly 4 to move relative to the housing 1, such that a free end of the locking assembly 4 can be switched between a locking position extending outside the housing 1 and an unlocking position extending into the housing 1. When the locking assembly 4 is in the locking position as shown in FIG. 1, the locking assembly 4 can lock the cup cover 3 on the cup body 2; when the locking assembly 4 is in the unlocking position as shown in FIG. 4, the operator can remove the cup cover 3 from the cup body 2. In this embodiment, a chef machine 100 with a simple structure is provided, which implements a higher efficiency of locking and unlocking of the cup body 2 and the cup cover 3 by a minimum of parts. When the locking assembly 4 is in the unlocking position, even if the cup body 2 is not placed on the housing 1, since the free end of the locking assembly 4 extends into the housing 1, the operator will not apply a force to the locking assembly 4 when transporting or cleaning the chef machine 100, accordingly the locking assembly 4 can be prevented from breaking, and the chef machine 100 can be used normally afterwards. In addition, when the locking assembly 4 is in the unlocking position, the locking assembly 4 is located inside the housing 1, thereby preventing dust or oil stain from accumulating on the locking assembly 4, and accordingly improving the locking accuracy of the locking assembly 4. Moreover, when the locking assembly 4 is in the unlocking position, the locking assembly 4 is located inside the housing 1, thereby also ensuring a simpler and more appealing appearance of the chef machine 100.

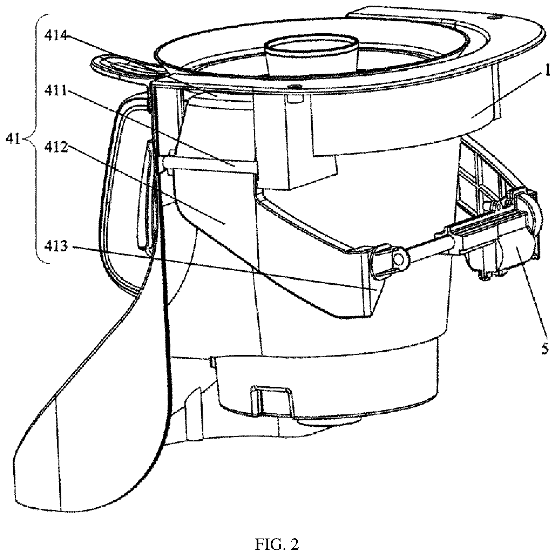

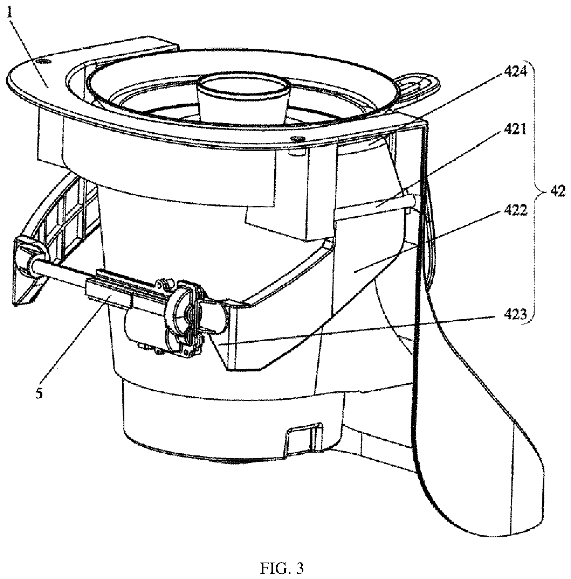

In order to implement a better sealing effect between the cup cover 3 and the cup body 2, as shown in FIGS. 2 and 3, the locking assembly 4 in the embodiment includes a left locking lever 41 and a right locking lever 42. The left locking lever 41 and the right locking lever 42 together press the cup cover 3 against the cup body 2, in such a way, there are two points of force application, thereby increasing the locking force between the cup cover 3 and the cup body 2, and ensuring a better sealing effect between the cup cover 3 and the cup body 2.

As shown in FIGS. 2 and 3, the locking assembly 4 is provided inside the housing 1. As for the specific structure of the left locking lever 41, as shown in FIG. 2, the left locking lever 41 includes a first connecting portion 413, a first body 412, and a first clamping portion 414. The first connecting portion 413 is connected to an output end of the driving assembly 5. The driving assembly 5 is located in front of the cup body 2. The first connecting portion 413, the first body 412 and the first clamping portion 414 are connected in sequence. The first body 412 can rotate relative to the housing 1, and the first body 412 is arc-shaped and surrounds the left side of the cup body 2. The first clamping portion 414 and the first body 412 form a first pressing structure by means of a first rotating shaft 411. When the driving assembly 5 performs a telescopic movement, the driving assembly 5 can drive the first pressing structure to press the cup cover 3 against the cup body 2. As for the specific structure of the right locking lever 42, as shown in FIG. 3, the right locking lever 42 includes a second connecting portion 423, a second body 422, and a second clamping portion 424. The second connecting portion 423 is connected to the driving assembly 5. The second connecting portion 423, the second body 422, and the second clamping portion 424 are connected in sequence. The second connecting portion 423 is connected to a body of the driving assembly 5. The second body 422 is rotatably connected to the housing 1, and the second body 422 is arc-shaped and surrounds the right side of the cup body 2. The second clamping portion 424 and the second body 422 form a second pressing structure by means of a second rotating shaft 421. When the driving assembly 5 performs a telescopic movement, the driving assembly 5 can drive the second pressing structure to press the cup cover 3 against the cup body 2.

The above-mentioned left locking lever 41 and right locking lever 42 with specific simple structures can convert the telescopic movement of the driving assembly 5 into the unlocking and locking actions of the left locking lever 41 and the right locking lever 42, which implements quick unlocking and locking of the cup cover 3 and the cup body 2 with each other. In addition, the left locking lever 41 and the right locking lever 42 with the specific structures can make the left locking lever 41, the right locking lever 42 and the driving assembly 5 evenly distributed on the periphery of the cup body 2, and the interior space of the housing 1 can be reasonably utilized, such that the left locking lever 41, the right locking lever 42 and the driving assembly 5 are arranged compactly in the housing 1 and thus occupy a smaller space, thereby effectively reducing a volume of the chef machine 100.

In addition, as shown in FIGS. 2 and 3, the first body 412 is arc-shaped and surrounds the periphery of the cup body 2, and the second body 422 is arc-shaped and surrounds the periphery of the cup body 2, which makes the left locking lever 41, the right locking lever 42 and the cup body 2 arranged compactly, thereby effectively saving the space occupied by the chef machine 100, and making the chef machine 100 compact and easy to carry.

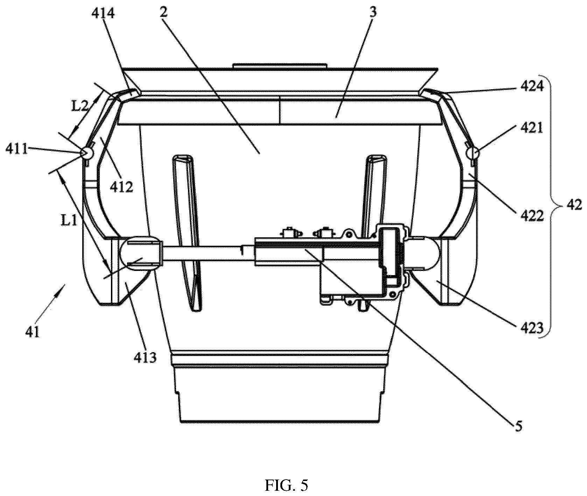

If the left locking lever 41 and the right locking lever 42 are both provided on one side of the cup body 2, the operator can apply a larger force to the cup cover 3 on the other side of the cup body 2 to open the cup cover 3 from the cup body 2, in the case, the safety of using the chef machine 100 cannot be guaranteed. In order to address the above problems, as shown in FIGS. 4 and 5, the left locking lever 41 and the right locking lever 42 are symmetrically arranged on both sides of a center line of the cup body 2, so that a locking force between the cup cover 3 and the cup body 2 can be evenly distributed along the peripheral direction of the cover 3, thereby preventing the operator from opening the cup cover 3 by applying a force to the cup cover 3 from one side of the cup body 2 and ensuring tight locking between the cup cover 3 and the cup body 2, which implements the safety of using the chef machine 100.

If the locking assembly 4 is slidably connected to the housing 1, there is a larger contact area between the locking assembly 4 and the housing 1. In this case, when the locking assembly 4 is switched between the locking position and the unlocking position, there is a considerable friction between the locking assembly 4 and the housing 1, thereby greatly reducing the service life of the locking assembly 4 and the housing 1. In order to solve the above problems, as shown in FIG. 2, the left locking lever 41 further includes a first rotating shaft 411. The first body 412 is rotatably connected to the housing 1 by means of the first rotating shaft 411. The first body 412 is spaced from the housing 1. Only the first rotating shaft 411 of the left locking lever 41 is in contact with the housing 1, while other portions of the left locking lever 41 are spaced from the housing 1. Therefore, when the left locking lever 41 is switched between the locking position and the unlocking position, the friction between the left locking lever 41 and the housing 1 is less, which can effectively reduce the wear of the left locking lever 41 and the housing 1, increase the service life of the left locking lever 41 and the housing 1, and ensure smoother switching of the left locking lever 41. As shown in FIG. 3, the right locking lever 42 further includes a second rotating shaft 421. The second body 422 is rotatably connected to the housing 1 by means of the second rotating shaft 421. The second body 422 is spaced from the housing 1. Only the second rotating shaft 421 of the right locking lever 42 is in contact with the housing 1, while other portions of the right locking lever 42 are spaced from the housing 1. When the right locking lever 42 is switched between the locking position and the unlocking position, the friction between the right locking lever 42 and the housing 1 is less, which can effectively reduce the wear of the right locking lever 42 and the housing 1, increase the service life of the right locking lever 42 and the housing 1, and ensure smoother switching of the right locking lever 42. Of course, in other embodiments, the first rotating shaft 411 may not be provided on the first body 412, but may be provided on the housing 1 and rotatably connected to the first body 412. The second rotating shaft 421 may not be provided on the second body 422, but may be provided on the housing 1 and rotatably connected to the second body 422.

If only one side of the left locking lever 41 is provided with the first rotating shaft 411 rotatably connected to the housing 1, the other side of the left locking lever 41 which is not connected to the housing 1 will droop under its gravity, causing relative positions of the left locking lever 41 and the housing 1 to be changed. During the position switching of the locking lever 41, the left locking lever 41 may interfere with the housing 1, and in a severe case, the left locking lever 41 may also strike the housing 1, which may cause damage to the left locking lever 41 and the housing 1.

In order to solve the above problems, as shown in FIG. 2, one end of the first rotating shaft 411 extends out of one side of the first body 412, and the other end of the first rotating shaft 411 extends out of the other side of the first body 412. The both ends of the first rotating shaft 411 are rotatably connected to the housing 1 respectively, thus both sides of the left locking lever 41 are rotatably connected to the housing 1, which implements a better support effect for the left locking lever 41, avoids the drop of the left locking lever 41 at one side caused by the gravity of the left locking lever 41, thereby ensuring the normal switching of the relative positions of the left locking lever 41 and the housing 1, and avoiding damage to the left locking lever 41 or the housing 1. In addition, as shown in FIG. 3, the structure of the right locking lever 42 is similar to that of the left locking lever 41, and the above effects can also be obtained.

As shown in FIGS. 4 and 5, the first clamping portion 414 and the second clamping portion 424 both extend toward the cup body 2. Shapes and sizes of the first pressing structure and the second pressing structure are matched with a shape and a size of an upper end of the cup cover 3. When the first pressing structure and the second pressing structure press against the cup cover 3, contact areas between the first pressing structure and the cup cover 3, and between the second pressing structure and the cup cover 3 are larger, which can generate greater pressure of the locking assembly 4 on the cup cover 3, and achieve the effect of tightly locking the cup cover 3 on the cup body 2, so that the cup cover 3 is hard to fall off the cup body 2. Specifically, the upper end of the cup cover 3 has a convex bending angle shape, and one side of the first pressing structure and one side of the second pressing structure that abut against the cup cover 3 respectively each have a concave bending angle shape matching the convex bending angle shape. The bending angle shape is simple and easy to make. In other embodiments, the upper end of the cup cover 3 can also be configured to have a concave bending angle shape, and one side of the first pressing structure and one side of the second pressing structure that abut against the cup cover 3 respectively each have a convex bending angle shape matching the concave bending angle shape, and the above effect can also be achieved.

In order to improve the processing efficiency and installation efficiency of the left locking lever 41 and the right locking lever 42, in the embodiment, the first rotating shaft 411 and the first body 412 are formed in one piece by an injection molding, and the second rotating shaft 421 and the second body 422 are formed in one piece by an injection molding.

Next, the specific connection relationship between the locking assembly 4 and the driving assembly 5 will be explained. As shown in FIGS. 4 and 5, the driving assembly 5 is a linear driving mechanism. An output end of the linear driving mechanism is connected to the left locking lever 41 in a rotating way, and a body of the linear driving mechanism is connected to the right locking lever 42 in a rotating way. When the linear driving mechanism works, the output end of the linear driving mechanism can drive the left locking lever 41 to rotate relative to the housing 1, and the body of the linear driving mechanism can drive the right locking lever 42 to rotate relative to the housing 1, thereby implementing the switching of the locking assembly 4 between the unlocking position shown in FIG. 4 and the locking position shown in FIG. 5. In this embodiment, the simultaneous movement of the left locking lever 41 and the right locking lever 42 can be implemented by only one linear driving mechanism, which makes the chef machine 100 have a simple structure and a small volume. Specifically, the linear driving mechanism in the embodiment includes a main body and an output end. The linear driving mechanism is a mechanism of which the output end moves linearly relative to the main body. The linear driving mechanism may be a linear motor, a linear cylinder, or a screw-nut mechanism. In other embodiments, the output end of the linear driving mechanism may be connected to the right locking lever 42 in a rotating way, and the body of the linear driving mechanism is connected to the left locking lever 41 in a rotating way, and the above effect can also be achieved.

For ease of understanding the invention, the working process of the linear driving mechanism will be described with reference to FIGS. 4 and 5. As shown in FIG. 4, when the output end of the linear driving mechanism is in a contraction state, the first clamping portion 414 and the second clamping portion 424 are both far away from the cup cover 3, and the cup cover 3 and the cup body 2 are in the unlocking position, so that they are unlocked from each other. As shown in FIG. 5, when the output end of the linear driving mechanism is in the extended state, the first body 412 rotates clockwise relative to the housing 1, and the second body 422 rotates counterclockwise relative to the housing 1, which implements that the first clamping portion 414 and the second clamping portion 424 respectively abut against the cup cover 3, thereby locking the cup cover 3 and the cup body 2 together. As shown in FIGS. 4 and 5, each of the free ends of the first clamping portion 414 and the second clamping portion 424 is provided in an arc shape. When the first clamping portion 414 and the second clamping portion 424 abut against the cup cover 3, the first clamping portion 414 and the second clamping portion 424 can be prevented from causing indentation on the cup cover 3, which avoids the first clamping portion 414 and the second clamping portion 424 from scratching the cup cover 3, thereby improving a service life of the cup cover 3.

As shown in FIG. 5, a distance from a pivot connection point of the left locking lever 41 and the linear driving mechanism to a location of the rotating shaft of the first rotating shaft 411 is a first distance LI, and a distance from an abutment point between the left locking lever 41 and the cup cover 3 to the location of the rotating shaft of the first rotating shaft 411 is a second distance L2. The first distance L1 is not less than the second distance L2. In this case, only a smaller force is needed to be provided by the linear driving mechanism, a larger locking force applied by the left locking lever 41 to the cup cover 3 and the cup body 2 can be achieved, which can effectively reduce the power and energy consumption of the linear driving mechanism, and reduce a use cost of the chef machine 100. The structure of the right locking lever 42 is similar to that of the left locking lever 41, and will not be repeated here.

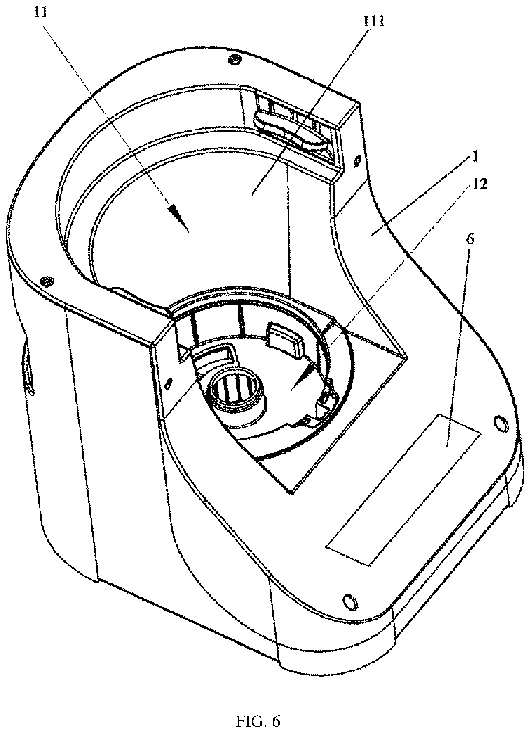

As shown in FIGS. 1 and 6, the housing 1 is provided with a receiving cavity 11 for receiving the cup body 2, an opening is provided on one side of the receiving cavity 11, and a handle 21 of the cup body 2 extends out of the receiving cavity 11 from the opening. From this, the operator can easily move the cup body 2 in the vertical direction by holding the handle 21, which is convenient for the operator to put the cup body 2 into the receiving cavity 11 or take the cup body 2 out of the receiving cavity 11. In addition, in order to avoid the cup body 2 from being shaken out of the opening due to the vibration of the chef machine 100 in working process, which causes the chef machine 100 to fail to work properly, in this embodiment, as shown in FIG. 1, the opening is configured so that its width is smaller than the diameter of the cup body 2, therefore the smaller opening can block the cup body 2 to prevent the cup body 2 from shaking out of the housing 1 and ensure the normal use of the chef machine 100.

In addition, as shown in FIGS. 1 and 6, a shape and a size of an inner wall 111 of the receiving cavity 11 match a shape and a size of an outer wall of the cup body 2. When the operator puts the cup body 2 into the receiving cavity 11 from a position above the receiving cavity 11, since the shape and size of the inner wall 111 of the receiving cavity 11 match the shape and size of the outer wall of the cup body 2, the inner wall 111 of the receiving cavity 11 can better guide the movement of cup body 2, thereby improving the installation efficiency and installation accuracy of the cup body 2 in the housing 1.

As shown in FIG. 6, the housing 1 is also provided with a bottom groove 12 which is in communication with the receiving cavity 11. The bottom groove 12 is located at a bottom portion of the receiving cavity 11, and a shape and a size of the bottom groove 12 are the same as those of the bottom portion of the cup body 2, thereby improving the positioning of the cup body 2 in the housing 1, further preventing the cup body 2 from separating from the housing 1, and ensuring the normal operation of the chef machine 100.

In addition, the chef machine 100 further includes a position detection assembly which is configured to control the work of the chef machine 100 when the locking assembly 4 is in the locking position. Only when the locking assembly 4 is in the locking position, the chef machine 100 can process the food in the cup body 2, thereby preventing the food in the cup body 2 from splashing out of the cup body 2. Specifically, the position detection assembly is a position sensor, and when the locking assembly 4 is in the locking position, the locking assembly 4 can trigger the position sensor, so that the position sensor can recognize that the locking assembly 4 is in the locking position.

In addition, the chef machine 100 further includes an in-place detection assembly which is configured to control the linear driving mechanism to work when the cup cover 3 is installed on the cup body 2, that is, the chef machine 100 can work only after the cup cover 3 is installed and locked on the cup body 2, thereby the food in the cup body 2 can be prevented from splashing out of the cup body 2 via the opening of the cup body 2, and the safe degree of using the chef machine 100 can be further improved. Specifically, the in-place detection assembly is a micro switch. After the cup cover 3 is installed on the cup body 2, the micro switch is triggered, so that the installation of the cup cover 3 on the cup body 2 can be recognized. In the embodiment, connection relationships between the position detection assembly as well as the in-place detection assembly and other parts of the chef machine 100 and control methods of the position detection assembly as well as the in-place detection assembly are conventional approaches in the art, and are not described in detail herein.

In addition, as shown in FIG. 6, a display screen 6 is provided on the housing 1. In the prior art, a display screen is typically arranged in a vertical direction, which makes it is difficult for the operator to see parameters displayed on the display screen 6 due to reflection of light. In order to solve the above problem, the display screen 6 is arranged on a first plane, and the first plane is located above a horizontal plane and is set at a preset angle to the horizontal plane, which can reduce the impact of the reflected light on the operator's sight and facilitate the operator to see the parameters on the display screen 6 clearly. Specifically, the preset angle in the embodiment is ranged from 8° to 60°, which can enable the operator to obtain the best observation effect.

### Embodiment II

The structure of the chef machine 100 disclosed in embodiment II is substantially the same as that of the chef machine 100 disclosed in embodiment I, but the main difference of the two is that the driving assembly 5 is a linear driving mechanism, in which one of the body and the output end of the linear driving mechanism and the output end is connected to the locking assembly 4 in a rotating way, and the other is rotatably connected to the housing 1. From this, the locking of the cup cover 3 and the cup body 2 by the locking assembly 4 can be implement by means of one linear driving mechanism alone without a plurality of linear driving mechanisms, which can reduce the volume of the chef machine 100 and make the structure of the chef machine 100 more compact and easy to carry.

It should be noted that the basic principles and main features of the present disclosure and the advantages of the present disclosure have been shown and described above. Those skilled in the art should understand that the present disclosure is not limited by the above-mentioned embodiments. The above-mentioned embodiments and the description are only used for illustrating the principles of the present disclosure. The present disclosure will have variations and improvements without departing from the spirit and scope of the present disclosure, and these variations and improvements all fall within the scope of protection of the present disclosure, and the scope of protection of the present disclosure is defined by the appended claims and equivalents.

## Claims

1. A food processing device, comprising a housing (1) and a cup body (2) provided on the housing (1), a cup cover (3) being provided at an opening of the cup body (2), **characterized in that** the food processing device further comprises:
a locking assembly (4) provided on the housing (1); and
a driving assembly (5) configured to drive the locking assembly (4) to move relative to the housing (1), so that a free end of the locking assembly (4) is switched between a locking position extending out of the housing (1) and an unlocking position extending into the housing (1).

2. The food processing device according to claim 1, wherein the locking assembly (4) is provided inside the housing (1), and the locking assembly (4) comprises:
a connecting portion connected to the driving assembly (5);
a body provided in an arc shape, one end of the body being connected to the connecting portion, a middle portion of the body being rotatably connected to the housing (1), the driving assembly (5) and the body are arranged at a periphery of the cup body (2); and
a clamping portion connected to the other end of the body, the clamping portion and the body together forming a pressing structure, and the pressing structure being capable of pressing the cup cover (3) on the cup body (2).

3. The food processing device according to claim 2, wherein the locking assembly (4) further comprises a rotating shaft by means of which the body is rotatably connected to the housing (1), and the body is spaced from the housing (1).

4. The food processing device according to claim 3, wherein one end of the rotating shaft extends out of one side of the body, the other end of the rotating shaft extends out of the other side of the body, and both ends of the rotating shaft are respectively rotatably connected to the housing (1).

5. The food processing device according to claim 2, wherein the clamping portion extends toward the cup body (2), a shape and a size of the pressing structure match a shape and a size of an upper end of the cup cover (3).

6. The food processing device according to claim 1, wherein the driving assembly (5) is a linear driving mechanism, the locking assembly (4) comprises a left locking lever (41) and a right locking lever (42) rotatably connected to the housing (1) respectively, one of the body of the linear driving mechanism and an output end of the linear driving mechanism is connected to the left locking lever (41) in a rotating way, and the other one is connected to the right locking lever (42) in a rotating way.

7. The food processing device according to claim 6, wherein the left locking lever (41) and the right locking lever (42) are symmetrically arranged on both sides of a center line of the cup body (2).

8. The food processing device according to claim 1, wherein the driving assembly (5) is a linear driving mechanism, the locking assembly (4) is rotatably connected to the housing (1), one of the body of the linear driving mechanism and an output end of the linear driving mechanism is connected to the locking assembly (4) in a rotating way, and the other one is rotatably connected to the housing (1).

9. The food processing device according to any one of claims 6 to 8, wherein a distance from a pivot connection point of the locking assembly (4) and the linear driving mechanism to a rotating shaft point at which the locking assembly (4) is rotated relative to the housing (1) is a first distance (LI), a distance from an abutment point of the locking assembly (4) and the cup cover (3) to the rotating shaft point is a second distance (L2), the first distance (LI) is not less than the second distance (L2).

10. The food processing device according to claim 1, wherein the housing (1) is configured with a receiving cavity (11) for receiving the cup body (2), an opening is provided on one side of the receiving cavity (11), a handle (21) on the cup body (2) extends out of the receiving cavity (11) through the opening, and a width of the opening is less than a diameter of the cup body (2);
preferably, a shape and a size of an inner wall (111) of the receiving cavity (11) match a shape and a size of an outer wall of the cup body (2);
preferably, the food processing device further comprises a position detection assembly configured to control the food processing device to work when the locking assembly (4) is in the locking position.
